# DEMANDE DE BREVET EUROPEEN

(11) **EP 4 576 858 A1**
(43) Date de publication de la demande: **25.06.2025**
(21) Numéro de dépôt: 24220438.6
(22) Date de dépôt: 17.12.2024
(51) Int. Cl.: H04W 12/40, G06Q 20/34, H04W 12/45, G06Q 20/32

(54) **DISPOSITIF ELECTRONIQUE**

(30) Priorité: 22.12.2023 FR 2315227
(71) Demandeur: STMicroelectronics International N.V., 1228 Plan-les-Ouates, Geneva (CH)
(72) Inventeur: ALARY, Philippe, 13114 PUYLOUBIER (FR)
(74) Mandataire: Cabinet Beaumont

(57) **Abrégé**

La présente description concerne un dispositif électronique (100) comprenant :
- un premier élément sécurisé (101) adapté à mettre en oeuvre une transaction ; et
- un deuxième élément sécurisé (104) adapté à recevoir les mêmes données que le premier élément sécurisé (101), et à commander un premier circuit électronique (105).

## Description

### Domaine technique

La présente description concerne de façon générale les dispositifs et circuits électroniques, et plus particulièrement les dispositifs et circuits électroniques adaptés à mettre en oeuvre une transaction.

### Technique antérieure

Il existe une multitude de dispositifs et circuits électroniques adaptés à mettre en oeuvre des transactions. Certaines transactions requièrent la mise en oeuvre de circuits adaptés à la gestion de données sensibles ou secrètes.

Il serait souhaitable de pouvoir améliorer, au moins en partie, certains aspects des dispositifs électroniques adaptés à mettre en oeuvre une transaction comprenant des informations sensibles.

### Résumé de l'invention

Il existe un besoin pour des dispositifs électroniques adaptés à mettre en oeuvre une transaction comprenant des informations sensibles

Il existe un besoin pour des dispositifs électroniques adaptés à mettre en oeuvre une transaction comprenant des informations sensibles, et à utiliser ces informations sensibles pour une fonction annexe de manière sécurisée.

Un mode de réalisation pallie tout ou partie des inconvénients des dispositifs électroniques connus adaptés à mettre en oeuvre une transaction comprenant des informations sensibles.

Un mode de réalisation prévoit un dispositif électronique comprenant deux éléments sécurisés adaptés à recevoir les mêmes informations sensibles.

Un mode de réalisation prévoit un dispositif électronique comprenant :
- un premier élément sécurisé adapté à mettre en oeuvre une transaction ; et
- un deuxième élément sécurisé adapté à recevoir les mêmes données que le premier élément sécurisé, et à commander un premier circuit électronique.

Selon un mode de réalisation, les premier et deuxième éléments sécurisés sont adaptés à recevoir des données de manière filaire.

Selon un mode de réalisation, les premier et deuxième éléments sécurisés sont reliés à des mêmes bornes de connexion.

Selon un mode de réalisation, les premier et deuxième éléments sécurisés sont adaptés à recevoir des données par une communication sans fil.

Selon un mode de réalisation, les premier et deuxième éléments sécurisés sont reliés à une même antenne.

Selon un mode de réalisation, la communication sans fil est une communication en champ proche.

Selon un mode de réalisation, le premier élément sécurisé comprend une première borne de référence reliée à une deuxième borne de référence du dispositif électronique par l'intermédiaire d'une première diode.

Selon un mode de réalisation, la première diode est une diode de type Schottky.

Selon un mode de réalisation, le deuxième élément sécurisé comprend une troisième borne de référence reliée à la deuxième borne de référence du dispositif électronique par l'intermédiaire d'une deuxième diode.

Selon un mode de réalisation, la deuxième diode est une diode de type Schottky.

Selon un mode de réalisation, ledit premier circuit comprend une quatrième borne reliée à ladite troisième borne de référence par l'intermédiaire d'un condensateur.

Selon un mode de réalisation, ledit premier circuit électronique comprend un deuxième circuit et un troisième circuit de pilotage dudit deuxième circuit.

Selon un mode de réalisation, le deuxième circuit électronique est choisi parmi le groupe comprenant : un écran, un capteur d'empreinte digital, une diode émettant de la lumière, un dispositif de commande pour capteur, et une mémoire.

Selon un mode de réalisation, ledit dispositif est choisi parmi le groupe comprenant : une carte bancaire, une carte de transport intelligent, une clé de voiture, une carte de contrôle d'accès.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, très schématiquement et sous forme de blocs, un mode de réalisation d'un dispositif électronique ;
la figure 2 représente des chronogrammes illustrant le fonctionnement du mode de réalisation de la figure 1 ;
la figure 3 représente un exemple plus détaillé du mode de réalisation de la figure 1 ; et
la figure 4 représente deux diagrammes (A) et (B) illustrant un avantage du mode de réalisation de la figure 3.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures

Sauf précision contraire, les expressions "environ", "approximativement", "sensiblement", et "de l'ordre de" signifient à 10 % près, de préférence à 5 % près.

Les modes de réalisation décrits ci-après concernent un dispositif électronique adapté à mettre en oeuvre une transaction manipulant des informations sensibles. On appelle ici information sensible une ou plusieurs données dont l'accès est restreint à une ou plusieurs personnes et/ou un ou plusieurs dispositifs électroniques. Une telle transaction est, par exemple, une transaction bancaire.

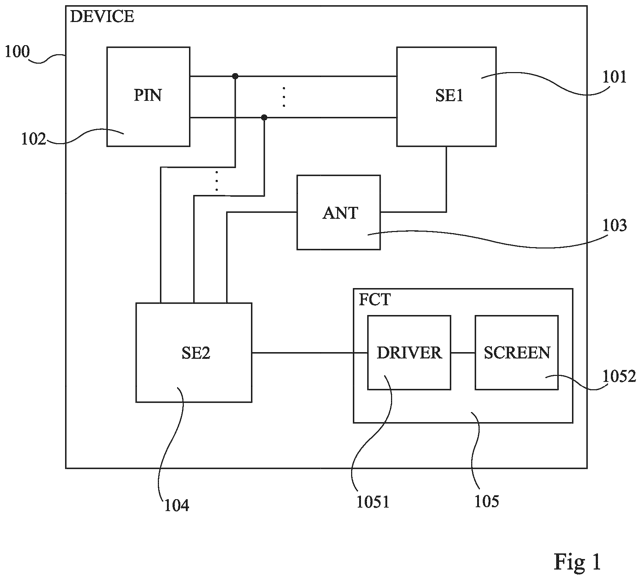

Les modes de réalisation décrits ci-après comprennent un premier élément sécurisé (Secure élément, SE) adapté à mettre en oeuvre ladite transaction, mais aussi un deuxième élément sécurisé adapté à mettre en oeuvre une ou plusieurs fonctions annexes du dispositif électronique de façon sécurisée en utilisant des données de ladite transaction. Les deux éléments sécurisés sont distincts et sont adaptés à recevoir les mêmes informations sensibles. Les avantages et détails de ces modes de réalisation sont décrits en relation avec les figures 1 à 4.

La figure 1 représente, très schématiquement et sous forme de blocs, un dispositif électronique 100 (DEVICE) selon un mode de réalisation.

Le dispositif électronique 100 est adapté à mettre en oeuvre une transaction, et, en particulier, une transaction utilisant des données sensibles avec un autre dispositif électronique. L'autre dispositif électronique est généralement externe au dispositif 100. Pour cela, le dispositif électronique 100 comprend un premier élément sécurisé 101 (SE1) adapté à mettre en oeuvre la transaction. Ce premier élément sécurisé est, par exemple, adapté à mettre en oeuvre une application logicielle exécutant la transaction de façon sécurisée.

On appelle ici, un élément sécurisé, un dispositif électronique sécurisée qui est considéré comme étant totalement fiable. Dit autrement, il est considéré comme impossible d'extraire de données stockées et/ou utilisées par un élément sécurisé. Plus particulièrement, un élément sécurisé (SE) est une puce séparée comprenant un processeur sécurisé, un moyen de stockage inviolable, et une mémoire d'exécution permettant à l'élément sécurisé d'exécuté ses tâches sans faire appel à des mémoires externes. Ce processeur est différent du processeur hôte ou du processeur de l'ordinateur. Son but est de permettre la mise en oeuvre d'opération sécurisées, comme, par exemple, des transactions sécurisées. Cet élément sécurisé peut, par exemple, mettre en oeuvre des applications qui s'appuient sur des algorithme de chiffrement et l'utilisation de clés sécurisées fonctionnant à l'intérieur de ce processeur sécurisé. Un élément sécurisé est donc une plate-forme matérielle inviolable, capable d'accueillir en toute sécurité des applications et de stocker des données confidentielles chiffrées.

Pour mettre en oeuvre la transaction, le dispositif 100 comprend, en outre, des bornes de connexion 102 (PIN) et/ou une antenne 103 (ANT) permettant d'établir une communication avec l'autre dispositif électronique.

Selon un exemple, les bornes de connexion 102 permettent au dispositif électronique de mettre en oeuvre un communication filaire avec l'autre dispositif. Les bornes de connexion 102 sont reliées au premier élément sécurisé 101, et permettent de lui fournir des données, par exemple, des données sensibles, pour mettre en oeuvre la transaction.

Selon un exemple, l'antenne 103 permet au dispositif électronique de mettre en oeuvre un communication sans fil avec l'autre dispositif. Selon un exemple, l'antenne 103 peut permettre de mettre en oeuvre une communication en champ proche (Near Field Communication, NFC).Comme les bornes de connexion 102, l'antenne 103 est reliée au premier élément sécurisé 101, et permet de lui fournir des données, par exemple, des données sensibles, pour mettre en oeuvre la transaction.

Ainsi, lorsque le dispositif électronique comprend les bornes 102 et l'antenne 103, le premier élément sécurisé 101 peut, indifféremment, mettre en oeuvre la transaction en utilisant les bornes 102 ou l'antenne 103.

Le dispositif 100 comprend, en outre, un deuxième élément sécurisé 104 (SE2) adapté à recevoir les mêmes informations, c'est-à-dire les mêmes données, par exemple, les mêmes données sensibles, que le premier élément sécurisé 101, et aussi à mettre en oeuvre une fonctionnalité annexe du dispositif électronique 100. Plus particulièrement, l'élément sécurisé 104 est relié aux bornes 102 et/ou à l'antenne 103 de la même façon que le premier élément sécurisé 101.

Pour mettre en oeuvre la fonctionnalité annexe, le dispositif électronique 100 comprend, en outre, un circuit 105 (FCT), mettant en oeuvre cette fonctionnalité, qui est commandé par l'élément sécurisé 104. Le circuit 105 peut, par exemple, être un moyen d'affichage, comme un écran ou des diodes électroluminescentes, un moyen de contrôle biométrique, comme un capteur d'empreinte digitale, etc. Selon un autre mode de réalisation, le circuit 105 peut être un dispositif de commande pour capteur, ou une mémoire.

Selon l'exemple particulier représenté en figure 1, le circuit 105 comprend un circuit de pilotage 1051 (DRIVER) et un écran 1052 (SCREEN) adapté à afficher une ou plusieurs informations concernant la transaction.

Selon un mode de réalisation préféré, le dispositif électronique 100 est une carte adaptée à mettre en oeuvre une transaction, comme carte bancaire ou une carte de transport, comprenant un écran permettant d'afficher une ou plusieurs informations concernant la transaction. Selon un premier exemple, la carte est une carte bancaire et l'écran permet d'afficher une code de validation de la carte, aussi code CVC ou code CW. Selon un deuxième exemple, la carte est une carte de transport et l'écran permet d'afficher un solde de titre de transport restant. Selon un troisième exemple, la carte peut être une clé de voiture, le circuit 105 peut permettre l'affichage ou l'utilisation d'une fonctionnalité propre à l'utilisation d'une voiture. Selon un quatrième exemple, la carte peut être une carte de ticket intelligent ou une carte de contrôle d'accès dans laquelle le circuit 105 peut permettre l'affichage d'un nombre de tickets restant sur la carte.

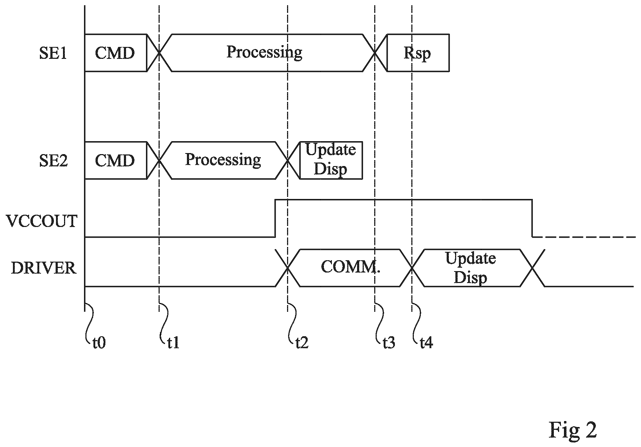

Le fonctionnement du dispositif 100 est le suivant. Lorsque le dispositif électronique 100 met en oeuvre une transaction avec un autre dispositif électronique, des données, par exemple des données sensibles, sont reçues, par exemple, au niveau des bornes 102 et/ou de l'antenne 103. Ces données sont transmises aux deux éléments sécurisés 101 et 104. Le premier élément sécurisé 101 utilise ces données, de façon sécurisée, pour mettre effectivement en oeuvre la transaction. Le deuxième élément sécurisé 104 utilise ces données, de façon sécurisée, pour mettre en oeuvre, si besoin, la fonctionnalité du circuit 105. La figure 2 présente un exemple plus détaillé de fonctionnement du dispositif 100.

Un avantage du dispositif 100 est qu'il permet à un dispositif électronique de mettre en oeuvre, de façon sécurisée, une transaction, mais aussi une fonctionnalité annexe sans pour autant modifier l'élément sécurisé mettant en oeuvre ladite transaction.

Un deuxième avantage du dispositif 100 est que l'élément sécurisé 104 et le circuit 105 peuvent être ajoutés à des dispositifs électroniques déjà existants, sans nécessiter de grandes modifications de leur architecture.

La figure 2 comprend des chronogrammes permettant de décrire, plus en détails, un mode de fonctionnement du dispositif 100 décrit en relation avec la figure 1.

La figure 2 comprend les chronogrammes suivants :
- un chronogramme SE1 représentant l'évolution de l'état du premier élément sécurisé 101 ;
- un chronogramme SE2 représentant l'évolution de l'état du deuxième élément sécurisé 104 ;
- un chronogramme VCCOUT représentant l'évolution d'une tension d'alimentation du circuit de pilotage 1051 ; et
- un chronogramme DRIVER représente l'évolution de l'état du circuit de pilotage 1051.

A un état initial t0, les éléments sécurisés 101 et 104 reçoivent des données concernant une transaction. Plus particulièrement, les éléments sécurisés 101 et 104 reçoivent une commande de démarrage d'une transaction. Les éléments sécurisés 101 et 104 sont alors dans un état de réception d'une commande CMD. Le circuit de pilotage 1051 n'est pas alimenté et n'est donc pas en fonctionnement.

A un état t1, suivant l'état t0, les éléments sécurisés 101 et 104 ont reçu la commande et passent à un état de traitement de la commande Processing. Cet état prend plus ou moins de temps selon l'élément sécurisé, puisque chaque élément sécurisé 101 et 104 traite les données reçues de façon différente.

Selon un exemple, à un état t2, suivant l'état t1, le deuxième élément sécurisé 104 termine de traiter la commande avant le premier élément sécurisé 101. Selon un exemple, le deuxième élément sécurisé 104 conclut des données reçues qu'il doit démarrer le circuit 105. Pour cela, l'élément sécurisé 104 démarre la tension d'alimentation VCCOUT, qui passe donc à un état haut. Le circuit de pilotage 1051 passe alors dans un état de réception d'une communication COMM.

Selon un exemple, à un état t3, suivant l'état t2, l'élément sécurisé 101 termine de traiter la commande. Selon une variante, les instants t2 et t3 peuvent être inversés. Selon un exemple, l'élément sécurisé 101 met en oeuvre la transaction en envoyant une réponse, et passe donc dans un état d'envoi de réponse RSP.

A un état t4, suivant l'état t2, le circuit de pilotage 1051 est apte à piloter le circuit 1052, il passe alors dans un état de commande Update Disp où il peut le faire. Selon un exemple, si le circuit 1052 est un écran d'affichage, le circuit de pilotage 1051 envoie les données nécessaires pour mettre à jour l'affichage du circuit 1052.

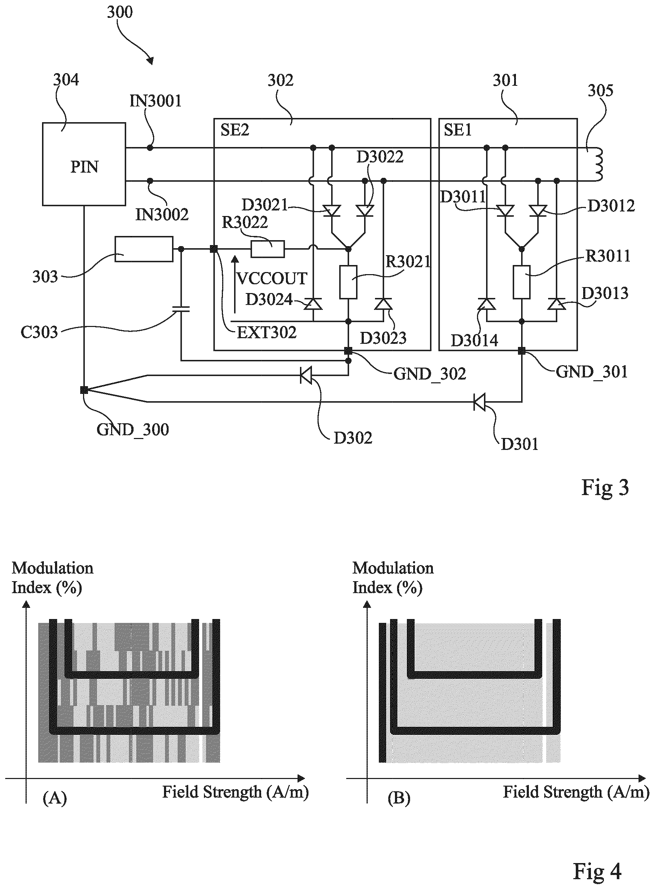

La figure 3 représente, schématiquement et partiellement sous forme de blocs, un dispositif électronique 300 (DEVICE) selon un mode de réalisation, du type du dispositif 100 décrit en relation avec la figure 1.

Comme le dispositif 100, le dispositif électronique 300 comprend :
- un premier élément sécurisé 301 (SE1), du type de l'élément sécurisé 101, adapté à mettre en oeuvre une transaction ;
- un deuxième élément sécurisé 302 (SE2), du type de l'élément sécurisé 104 ;
- un circuit 303, du type du circuit 105, adapté à mettre en oeuvre une fonction annexe du dispositif 300, et à être commandé par le deuxième élément sécurisé 302 ;
- des bornes de connexion 304 (PIN), du type des bornes de connexion 102, adapté à mettre en oeuvre une communication filaire ; et
- une antenne 305, du type de l'antenne 103, représentée sous la forme d'une bobine, et permettant de mettre en oeuvre une communication sans fil.

Comme dans le dispositif 100, dans le dispositif 300, les éléments sécurisés 301 et 302 sont adaptés à recevoir les mêmes données. Pour cela, on nomme IN3001 et IN3002 des noeuds d'entrée de données reliés aux bornes de connexion 304 et à l'antenne 305. Le premier élément sécurisé 301 est relié aux noeuds d'entrée IN3001 et IN3002. De façon similaire, le deuxième élément sécurisé 302 est relié aux noeuds d'entrée IN3001 et IN3002. De plus, les bornes de connexion 304 sont, en outre, reliées, de préférence connectée, à une borne de référence générale GND_300 du dispositif 300. La borne de référence GND_300 est adapté à recevoir un potentiel de référence, par exemple la masse.

Selon un exemple, le premier élément sécurisé 301 comprend quatre diodes D3011, D3012, D3013, et D3014 et une charge R3011 représentée par une résistance. Selon un exemple, l'anode de la diode D3011 est reliée, de préférence connectée, au noeud IN3001, et la cathode de la diode D3011 est reliée, de préférence connectée, à une première borne de la charge R3011. L'anode de la diode D30112 est reliée, de préférence connectée, au noeud IN3002, et la cathode de la diode D3012 est reliée, de préférence connectée, à la première borne de la charge R3011. La cathode de la diode D3013 est reliée, de préférence connectée, au noeud IN3002, et l'anode de la diode D3013 est reliée, de préférence connectée, à une deuxième borne de la charge R3011. La cathode de la diode D3014 est reliée, de préférence connectée, au noeud IN3001, et l'anode de la diode D3014 est reliée, de préférence connectée, à la deuxième borne de la charge R3011.

Selon un mode de réalisation, le premier élément sécurisé comprend une borne de référence GND_301, reliée, de préférence connectée, à la deuxième borne de la charge R3011. Cette première borne de référence GND_301 est reliée, de préférence connectée, à la borne de référence générale GND_300 du dispositif 300 par l'intermédiaire d'une diode D301. La diode D301 permet au premier élément sécurisé 301 d'avoir une borne de référence isolée de la borne de référence générale GND_300. Selon un exemple, la diode D301 est une diode classique. Selon un mode de réalisation préféré, la diode D301 est une diode de Schottky qui présente une tension de seuil plus basse qu'une diode classique.

De plus, selon un exemple, le deuxième élément sécurisé 302 comprend quatre diodes D3021, D3022, D3023, et D3024 et une charge R3021 représentée par une résistance. Selon un exemple, l'anode de la diode D3021 est reliée, de préférence connectée, au noeud IN3001, et la cathode de la diode D3021 est reliée, de préférence connectée, à une première borne de la charge R3021. L'anode de la diode D3021 est reliée, de préférence connectée, au noeud IN3002, et la cathode de la diode D3022 est reliée, de préférence connectée, à la première borne de la charge R3021. La cathode de la diode D3023 est reliée, de préférence connectée, au noeud IN3002, et l'anode de la diode D3023 est reliée, de préférence connectée, à une deuxième borne de la charge R3021. La cathode de la diode D3024 est reliée, de préférence connectée, au noeud IN3001, et l'anode de la diode D3024 est reliée, de préférence connectée, à la deuxième borne de la charge R3021.

Selon un mode de réalisation, le deuxième élément sécurisé comprend une borne de référence GND_302, reliée, de préférence connectée, à la deuxième borne de la charge R3021. Cette première borne de référence GND_302 est reliée, de préférence connectée à la borne de référence générale GND_300 du dispositif 300 par l'intermédiaire d'une diode D302. La diode D302 permet au deuxième élément sécurisé 302 d'avoir une borne de référence isolée de la borne de référence générale GND_300, et de la borne de référence GND_301 du premier élément sécurisé. Selon un exemple, la diode D302 est une diode classique. Selon un mode de réalisation préféré, la diode D302 est une diode de Schottky.

Selon un exemple, le deuxième élément sécurisé comprend, en outre, une résistance R3022 reliant la première borne de la charge R3021 à une borne EXT302. La borne EXT302 est une borne du deuxième élément sécurisé 302 reliée, de préférence connectée, au circuit 303 pour lui fournir une tension d'alimentation VCCOUT ou une tension de commande. Selon un exemple la tension d'alimentation VCCOUT est prise entre la borne EXT302 et la borne de référence GND_302 de l'élément sécurisé 302.

Selon un exemple, l'entrée du circuit 303 est reliée à la borne EXT302 du deuxième élément sécurisé 302, mais aussi à la borne de référence GND_302 par l'intermédiaire d'un condensateur de filtrage C303.

La figure 4 représente deux diagrammes (A) et (B) illustrant un avantage du circuit 300 décrit en relation avec la figure 3.

Comme décrit précédemment, les éléments sécurisés 301 et 302 ont leur bornes de référence GND_301 et GND_302 isolées l'une de l'autre, et isolées de la borne de référence générale GND_300 du dispositif 300.

Les diagrammes (A) et (B) représentent l'état des communication sans fil mise en oeuvre en fonction de la variation de l'index de modulation d'une communication sans fil par rapport à la puissance du champ électromagnétique générée par un lecteur et utilisé par cette communication sans fil. Une case foncée représente une communication sans fil qui n'a pas pu être mise en oeuvre, et une case claire représente une communication sans fil qui a pu être mise en oeuvre.

Le diagramme (A) représente le cas où les bornes de référence GND_301 et GND_302 ne sont pas isolées l'une de l'autre, et de la borne de référence générale GND_300 du dispositif 300. Le diagramme (B) représente le cas où les bornes de référence GND_301 et GND_302 sont isolées l'une de l'autre, et de la borne de référence générale GND_300 du dispositif 300.

Il apparaît clairement que les deux éléments sécurisés 301 et 302 peuvent interférer dans les communications reçues, et qu'isoler leurs bornes de conduction permet d'améliorer les communications externes.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Dispositif électronique (100 ; 300) comprenant :
- un premier élément sécurisé (101 ; 301) adapté à mettre en oeuvre une transaction ; et
- un deuxième élément sécurisé (104 ; 302) adapté à recevoir les mêmes données que le premier élément sécurisé (101 ; 301), et à commander un premier circuit électronique (105 ; 303).

2. Dispositif selon la revendication 1, dans lequel les premier et deuxième éléments sécurisés (101, 104 ; 301, 302) sont adaptés à recevoir des données de manière filaire.

3. Dispositif selon la revendication 2, dans lequel les premier et deuxième éléments sécurisés (101, 104 ; 301, 302) sont reliés à des mêmes bornes de connexion (102 ; 304)

4. Dispositif selon l'une quelconque des revendications 1 à 3, dans lequel les premier et deuxième éléments sécurisés (101, 104 ; 301, 302) sont adaptés à recevoir des données par une communication sans fil.

5. Dispositif selon la revendication 4, dans lequel les premier et deuxième éléments sécurisés (101, 104 ; 301, 302) sont reliés à une même antenne (103, 305).

6. Dispositif selon la revendication 4 ou 5, dans lequel la communication sans fil est une communication en champ proche.

7. Dispositif selon l'une quelconque des revendications 1 à 6, dans lequel le premier élément sécurisé (101 ; 301) comprend une première borne de référence (GND_301) reliée à une deuxième borne de référence (GND_300) du dispositif électronique (100, 300) par l'intermédiaire d'une première diode (D301).

8. Dispositif selon la revendication 7, dans lequel la première diode (D301) est une diode de type Schottky.

9. Dispositif selon l'une quelconque des revendications 1 à 8, dans lequel le deuxième élément sécurisé (104 ; 302) comprend une troisième borne de référence (GND_300) reliée à la deuxième borne de référence (GND_300) du dispositif électronique par l'intermédiaire d'une deuxième diode (D302).

10. Dispositif selon la revendication 9, dans lequel la deuxième diode (D302) est une diode de type Schottky.

11. Dispositif selon l'une quelconque des revendications 1 à 10, dans lequel ledit premier circuit (105 , 303) comprend une quatrième borne reliée à ladite troisième borne de référence (GND_300) par l'intermédiaire d'un condensateur (C303).

12. Dispositif selon l'une quelconque des revendications 1 à 11, dans lequel ledit premier circuit électronique (105 ; 303) comprend un deuxième circuit (1052) et un troisième circuit (1051) de pilotage dudit deuxième circuit (1052).

13. Dispositif selon la revendication 12, dans lequel le deuxième circuit électronique (1052) est choisi parmi le groupe comprenant : un écran, un capteur d'empreinte digital, une diode émettant de la lumière, un dispositif de commande pour capteur, et une mémoire

14. Dispositif selon l'une quelconque des revendications 1 à 13, étant choisi parmi le groupe comprenant : une carte bancaire, une carte de transport intelligent, une clé de voiture, une carte de contrôle d'accès.
